# EUROPEAN PATENT APPLICATION

(11) **EP 2 610 855 A1**
(43) Date of publication of application: **03.07.2013**
(21) Application number: 12198912.3
(22) Date of filing: 21.12.2012
(51) Int. Cl.: G09G 5/00, H04N 5/44, G06F 3/16

(54) **Display apparatus**

(30) Priority: 28.12.2011 KR 20110144402; 30.12.2011 KR 20110147951; 30.12.2011 KR 20110147953; 27.11.2012 KR 20120135204
(71) Applicant: Samsung Electronics Co., Ltd, Gyeonggi-do 443-742 (KR)
(72) Inventor: Lee, Jong Po, Gyeonggi-do (KR); Park, Jeong Kee, Gyeonggi-do (KR); Heo, Jung Woo, Gyeonggi-do (KR)
(74) Representative: Brandon, Paul Laurence

(57) **Abstract**

A display apparatus including a remote controller signal receiver which receives a remote controller signal, a remote controller operation display light emitting diode (LED) which indicates an operation control according to the remote controller signal, a human interface module which performs a human interface function, a human interface operation display light emitting diode (LED) which indicates an operation control according to the human interface function, and a controller which controls the remote controller operation display LED and the human interface operation display LED by use of signals being transmitted from the remote controller signal receiver and the human interface module, thereby providing user convenience.

## Description

### BACKGROUND

### 1. Field

Exemplary embodiments of the present disclosure relate to a display apparatus having a camera mounted thereon.

### 2. Description of the Related Art

A display apparatus embodied as a television and a monitor is an apparatus to display an image being supplied from an image supply source. In recent years, the display apparatus is available to receive a photograph or an image through various external interfaces, such as a Universal Serial Bus (USB) memory or a network, and to display the received photograph or image.

Additionally, a technology is being proposed for implementing a Human Interface (HI) function in the display apparatus to provide user's convenience.

The Human Interface (HI) refers to a technology enabling the easy manipulation of a computer or the easy input of data through speaking, handwriting, and touching without a user having to input each letter through a keyboard. That is, the HI is an innovative technique enabling a computer to understand human communications. Examples of the HI technology include speech recognition, gesture (motion) recognition, and face recognition.

In general, the operation control of the display apparatus embodied as the conventional television and monitor is conducted through a remote controller. If a user, in order to control the operation of the display apparatus, inputs an operation command, for example, a channel switch or volume adjustment, by use of a remote controller, an operation control signal of the remote controller is transmitted to a remote controller signal receiver provided on the display apparatus. Thereafter, a controller, which controls the operation of the display apparatus, interprets a control signal which is received from the remote signal receiver to control the operation of a corresponding function unit according to a command (request) of the user. In this case, the controller indicates to the user that the display apparatus is being operated according to the control signal of the remote controller, by use of a display device, such as a light emitting diode (LED).

Cases of controlling the operation of the display apparatus through the remote controller, and cases of controlling the operation of the display apparatus through the HI interface function have been extensively researched. A user should be informed that the display apparatus is being operated according to the HI function.

Additionally, in order to implement additional functions, such as a speech recognition function, a motion recognition function and a video call function, the display apparatus should be provided with a camera to obtain an image of a user, a signal input part, such as a microphone to receive the speech of a user, and a signal processing circuit to process the speech signal being input through the microphone. In addition, the camera is separately mounted on a bezel part of an upper portion of the display apparatus for a user to perform a video call.

In this case, in order to obtain various angles of images, the viewing angle of the camera has to be adjusted.

In the related art technology, there is no method of enabling a user to recognize a state in which a camera is disposed outside a viewing angle required to obtain an image. Accordingly, a user has difficulty in precisely recognizing the current viewing angle of the camera. Additionally, a fixing member is not provided between the camera and the display apparatus, thereby making it difficult to install the camera.

Additionally, the direction indicated at the position of the camera is not recognized, thereby making it difficult to adjust the angle of the camera.

### SUMMARY

Therefore, it is an aspect of the present disclosure to provide a display apparatus which improves user convenience by indicating to a user that the operation control of the display apparatus is performed according to a human interface function, such as speech recognition, gesture (motion) recognition, and face recognition.

It is another aspect of the present disclosure to provide a display apparatus which enables a user to easily adjust the viewing angle of a camera by indicating to the user that the camera is disposed outside a viewing angle required for the camera to obtain an image.

It is another aspect of the present disclosure to provide a display apparatus which improves the installation efficiency and esthetic quality of the display apparatus by integrating the display apparatus with the camera.

It is another aspect of the present disclosure to provide a display apparatus which enables an easy adjustment of the angle of a camera since the direction indicated at the position of the camera is recognized.

Additional aspects of the disclosure will be set forth in part in the description which follows and, in part, will be obvious from the description, or may be learned by practice of the disclosure.

In accordance with one aspect of the present disclosure, a display apparatus includes a remote controller signal receiver, a remote controller operation display light emitting diode (LED), a human interface module, a human interface operation display light emitting diode (LED), and a controller. The remote controller signal receiver may receive a remote controller signal. The remote controller operation display light emitting diode (LED) may be indicate an operation control according to the remote controller signal. The human interface module may perform a human interface function. The human interface operation display light emitting diode (LED) may indicate an operation control according to the human interface function. The controller may control the remote controller operation display LED and the human interface operation display LED by use of signals transmitted from the remote controller signal transmitter and the human interface module.

The human interface module may include a signal input unit and a signal processor. The signal input device may acquire an image signal and a speech signal from an external source. The signal processor may receive and process the image signal and the speech signal acquired through the signal input device.

The signal input device may include a camera and a microphone. The camera may photograph an object and acquire the image signal about the object. The microphone may receive the speech signal of the object.

The signal processor may perform an analysis on the image signal and the speech signal by applying at least one of a speech recognition algorithm, a gesture recognition algorithm and a face recognition algorithm to the image signal and the speech signal input through the signal input device, and to transmit the analyzed signal to the controller.

The display apparatus may further include a body that forms an external appearance of the display apparatus. The signal input device may be mounted at an outside of the body.

The signal processor may be mounted inside of the body.

In accordance with another aspect of the present disclosure, a display apparatus includes a remote controller signal receiver, a human interface module, a multi-color light emitting diode (LED), and a controller. The remote controller signal receiver may receive a remote controller signal. The human interface module may perform a human interface function. The controller may control the multi-color LED by use of signals being transmitted from the remote controller signal reception receiver and the human interface module.

The controller may control the multi-color LED to display a color during an operation control according to the remote controller signal, and during an operation control according to the human interface function, the controller may control the multi-color LED to display a color different from the color displayed during the operation control according to the remote controller signal.

The human interface module may include a signal input device and a signal processor. The signal input unit may acquire an image signal and a speech signal from an external source. The signal processor may receive and process the image signal and the speech signal acquired through the signal input device.

The signal input device may include a camera and a microphone. The camera may photograph an object and acquire the image signal about the object. The microphone may receive the speech signal of the object.

The signal processor may perform an analysis on the image signal and the speech signal by applying at least one of a speech recognition algorithm, a gesture recognition algorithm and a face recognition algorithm to the image signal and the speech signal being input through the signal input device, and transmit the analyzed signal to the controller.

The display apparatus may further include a body forming an external appearance of the display apparatus. The signal input device may be mounted at an outside of the body of the display apparatus.

The signal processor may be mounted inside of the body of the display apparatus.

In accordance with another aspect of the present disclosure, a display apparatus includes a body, a camera and an angle adjustment device. The camera may be mounted at an upper portion of the body of the display apparatus to acquire an image signal of an external object. The angle adjustment device may adjust a viewing angle of the camera. The camera may include a display, which when the camera is disposed outside of a range of the viewing angle required for the camera to obtain an image, indicates to a user that the camera is disposed outside of the required range of the viewing angle.

The camera may include a camera body and a lens. The camera body may be provided in an approximate cylindrical shape. The lens may be coupled to a hole that is formed by opening one side of the camera body. The display may be provided on a circumference of the camera body.

An indicator may be formed on the display to indicate that the camera is disposed outside the range of the viewing angle required for the camera to obtain the image.

The indicator may include at least one of a figure, a pattern, a letter, and a color.

The angle adjustment device may include a wheel which is rotatable, and a gear device which delivers a rotation of the wheel to the camera.

In accordance with another aspect of the present disclosure, a display apparatus includes a display panel, a bezel and a camera. The display panel may display image information. The bezel may be disposed at an outer side of a rim of the display panel. The camera may be installed on the bezel. The camera may include a display, which, when the camera is disposed outside of a range of a viewing angle required for the camera to obtain an image while rotating upward or downward, indicates to a user that the camera is disposed outside the required range of the viewing angle.

The display apparatus may further include an angle adjustment device which adjusts the viewing angle of the camera. The angle adjustment device may include a wheel which is rotatable, and a gear device which delivers a rotation of the wheel to the camera.

The camera may include a camera body and a lens. The camera body may be provided in an approximate cylindrical shape. The lens may be coupled to a hole that is formed by opening one side of the camera body. The display may be provided on a circumference of the camera body.

An indicator may be formed on the display to indicate that the camera is disposed outside the required range of the viewing angle.

The indicator may include at least one of a figure, a pattern, a letter, and a color.

In accordance with another aspect of the present disclosure, a display apparatus includes a display panel, a bezel, a camera, an angle adjustment device and a center indicating device. The display panel may display an image. The bezel may be formed at a periphery of the display panel. The camera may be installed on the bezel. The angle adjustment device may adjust a viewing angle of the camera. The center indicating device may enable a position of a center of the camera to be indicated from an outside position. The center indicating device may be formed on at least one of a front side of the camera, the bezel and the angle adjustment device.

The angle adjustment device may include a wheel and a gear device. The wheel may be rotatable. The gear device may deliver a rotation of the wheel to the camera.

The gear device may be provided in plurality thereof.

The plurality of gear devices may include at least one reduction gear.

The center indicating device may be formed on the wheel.

The wheel may be provided in a cylindrical shape, and the wheel may include a groove portion recessed inward, and a protrusion portion protruding while extending from the groove portion. The center indicating device may be formed on at least one of the groove portion and the protrusion portion.

The camera may include a case integrally formed with an upper portion of the display panel. The center indicating device may be formed on the case.

In accordance with another aspect of the present disclosure, a display apparatus includes a display panel, a camera, and a center indicating device. The camera may be provided at an upper portion of the display panel. The center indicating device may enable a position of a center of the camera to be indicated from outside.

The center indicating device may be formed on a front side of the camera.

The display apparatus may further include an angle adjustment device which adjusts a viewing angle of the camera. The angle adjustment device may include a wheel which is rotatable, and a gear device which delivers a rotation of the wheel to the camera.

The center indicating device may be formed on the wheel.

The camera may include a case integrally formed with the upper portion of the display panel. The center indicating device may be formed on the case.

The gear device may be provided in plurality thereof.

At least one gear device of the plurality of gear devices may be coupled to the wheel, and at least one other gear device of the plurality of gear devices may be coupled to the camera.

At least one gear device of the plurality of gear devices may be a reduction gear.

As described above, the display apparatus can improve user convenience by indicating a user that the operation control of the display apparatus is performed according to the human interface function, such as the speech recognition, the gesture (motion) recognition, and the face recognition.

The display apparatus enables a user to easily adjust the viewing angle of a camera by indicating to the user that the camera is disposed outside the viewing angle required for the camera to obtain an image.

The display apparatus can improve user convenience by enabling a user to adjust the viewing angle of the camera without viewing a display panel on which an image obtained by the user is displayed.

The display apparatus can improve the installation efficiency and the esthetic quality of the display apparatus by integrating the display apparatus with the camera.

The display apparatus can enable an easy adjustment of the angle of a camera since the direction indicated at the position of the camera is recognized.

### BRIEF DESCRIPTION OF THE DRAWINGS

These and/or other aspects of the disclosure will become apparent and more readily appreciated from the following description of the exemplary embodiments, taken in conjunction with the accompanying drawings of which:
FIG. 1 is a view illustrating the external appearance of a display apparatus in accordance with one exemplary embodiment of the present disclosure.
FIG. 2 is a view illustrating the configuration of a human interface (HI) module forming the display apparatus of FIG. 1.
FIG. 3 is a view illustrating the configuration of a human interface (HI) module forming the display apparatus of FIG. 1.
FIG. 4 is a control block diagram illustrating the display apparatus of FIG. 1.
FIG. 5 is a view illustrating the external appearance of a display apparatus in accordance with another exemplary embodiment of the present disclosure.
FIG. 6 is a view illustrating the configuration of a human interface (HI) module forming the display apparatus of FIG. 5.
FIG. 7 is a view illustrating the configuration of a human interface (HI) module forming the display apparatus of FIG. 5.
FIG. 8 is a control block diagram illustrating the display apparatus of FIG. 5.
FIG. 9 is a front view schematically illustrating a display apparatus in accordance with still another exemplary embodiment of the present disclosure.
FIG. 10 is an enlarged view showing the portion "A" of FIG. 9.
FIG. 11 is a view schematically illustrating the rear side of the display apparatus of FIG. 9.
FIG. 12 is a view schematically illustrating the internal structure of a signal input device forming the display apparatus of FIG. 9.
FIG. 13 is a perspective view schematically illustrating the internal structure of a signal input device forming the display apparatus of FIG. 9.
FIG. 14 is a view illustrating the shape of a camera being mounted on the display apparatus of
FIG. 9.

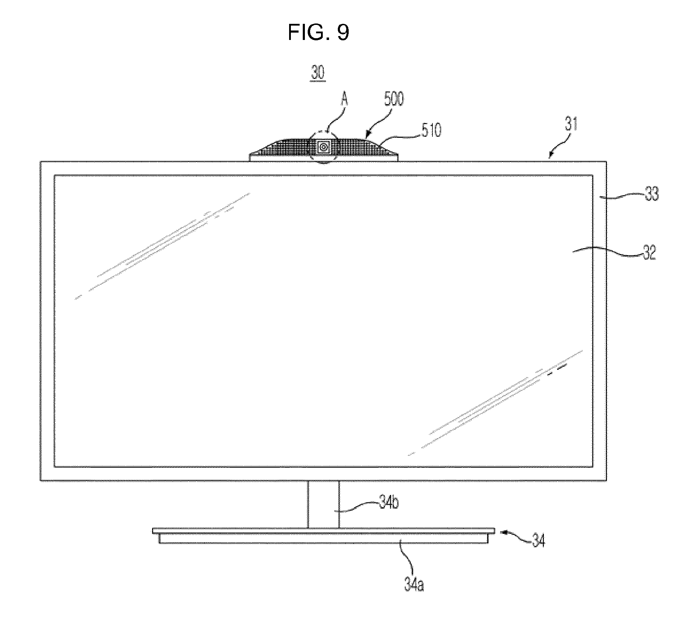

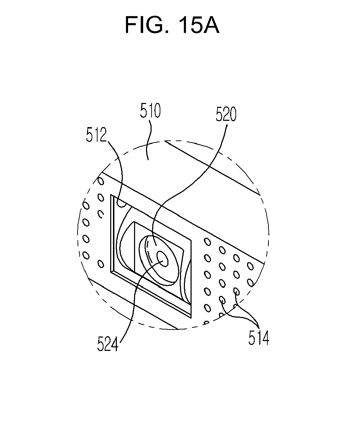

FIGS. 15A-15C illustrate processes of adjusting the viewing angle of the camera of the display apparatus of FIG. 9.

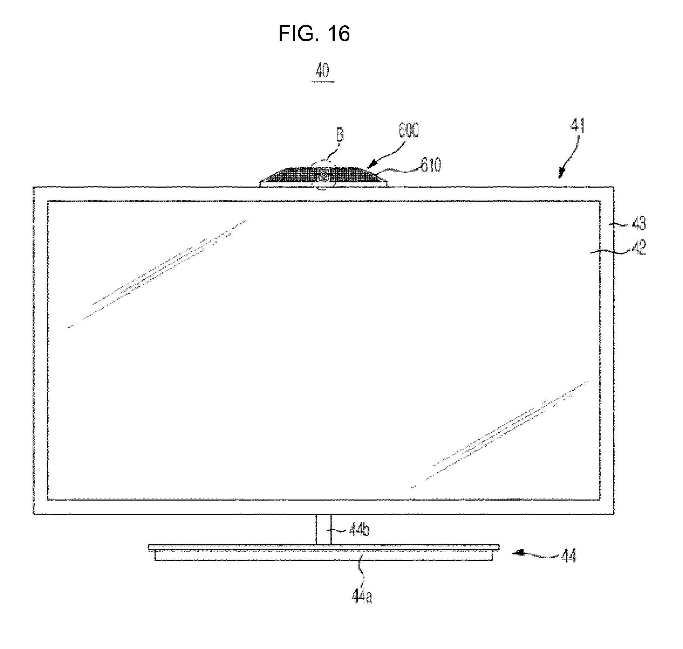

FIG. 16 is a front view schematically illustrating a display apparatus in accordance with still another exemplary embodiment of the preset disclosure.

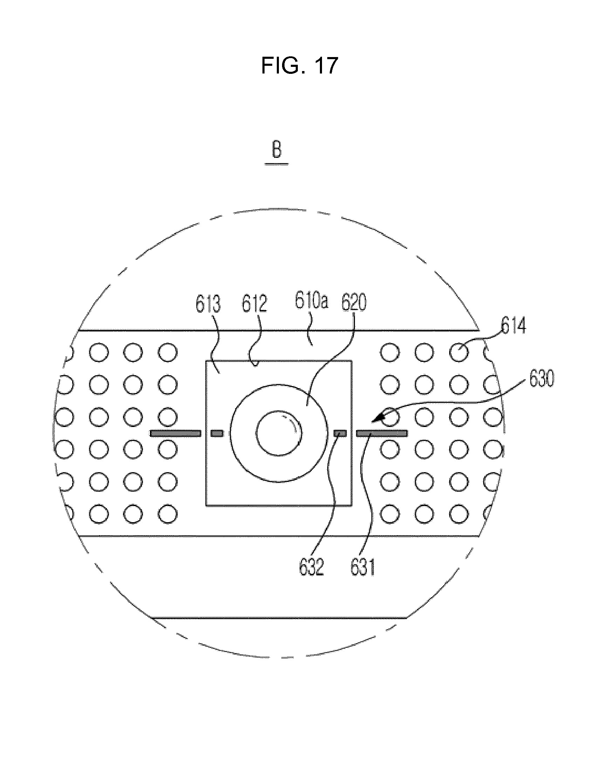

FIG. 17 is an enlarged view showing the portion "B" of FIG. 16.

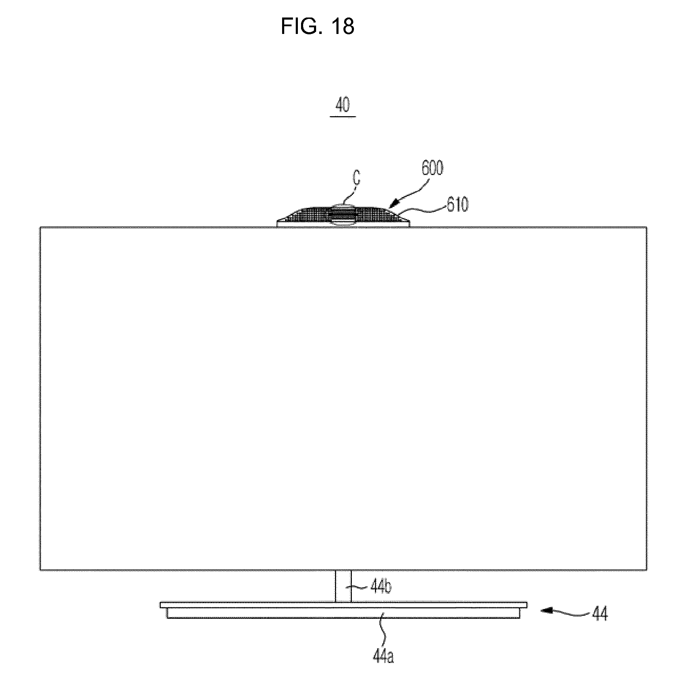

FIG. 18 is a view schematically illustrating the rear side of the display apparatus of FIG. 16.

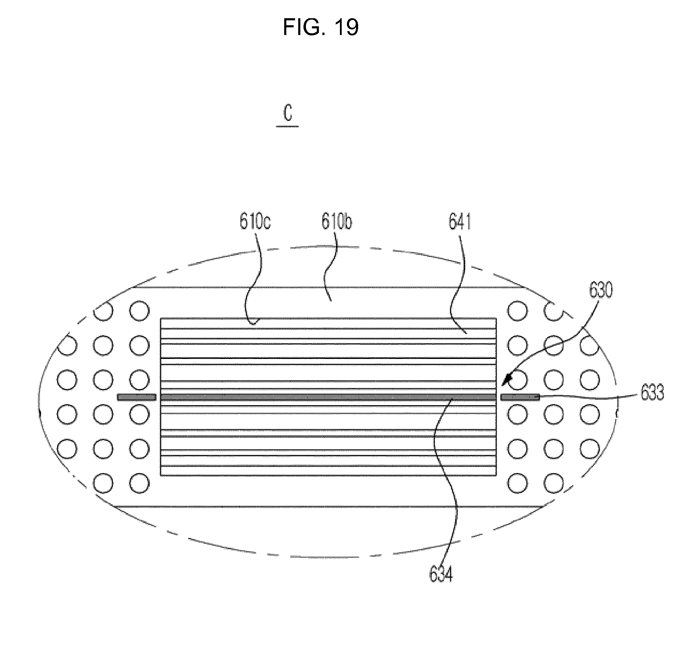

FIG. 19 is an enlarged view showing the portion "C" of FIG. 18.

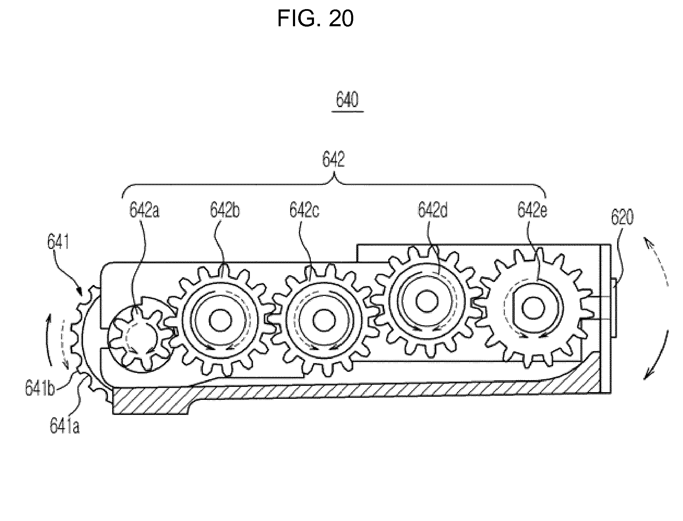

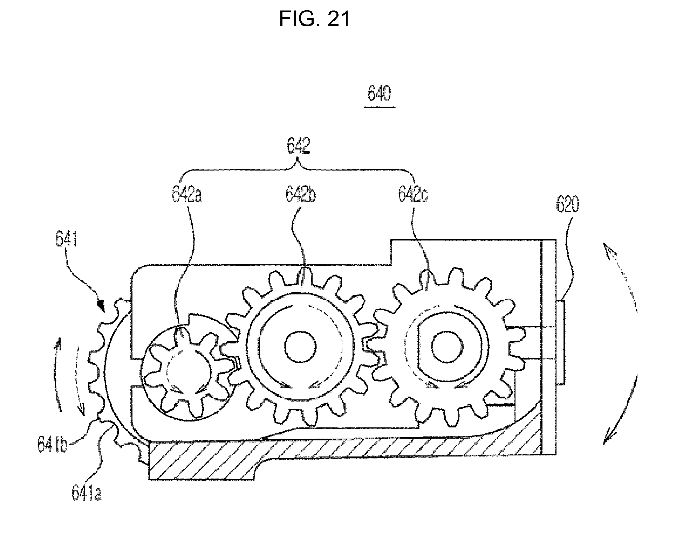

FIGS. 20 and 21 are cross sectional views schematically illustrating an angle adjustment device of the display apparatus of FIG. 16.

### DETAILED DESCRIPTION OF THE EXEMPLARY EMBODIMENTS

Reference will now be made in detail to the exemplary embodiments of the present disclosure, examples of which are illustrated in the accompanying drawings, wherein like reference numerals refer to like elements throughout.

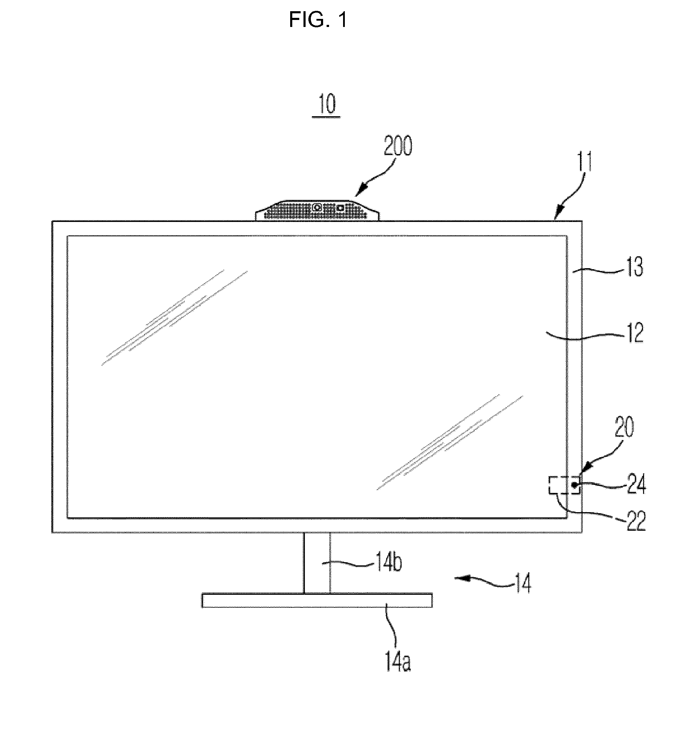

FIG. 1 is a view illustrating the external appearance of a display apparatus in accordance with one exemplary embodiment of the present disclosure. Referring to FIG. 1, a display apparatus 10 in accordance with one exemplary embodiment of the present disclosure includes a body 11 forming the external appearance of the display apparatus 10, a display panel 12 mounted on a front surface of the body 11 to display image information, a bezel 13 disposed at an outer side of a rim of the display panel 12, and a stand 14 which is fixed to the display panel 12 and the bezel 13.

The display panel 12 is implemented using a thin film transistor liquid crystal display (TFT-LCD) formed by injecting a liquid crystal layer between two glass substrates on which a color filter and a thin film transistor are formed.

The bezel 13 is provided at each of four sides of the display panel 12 to accommodate rims of the four sides of the display panel 12.

The stand 14 includes a support portion 14a provided in a flat shape to support the bottom, and a connection portion 14b fixed to the bezel 13 provided at a lower side of the display panel 12 while extending from the support portion 14a upward.

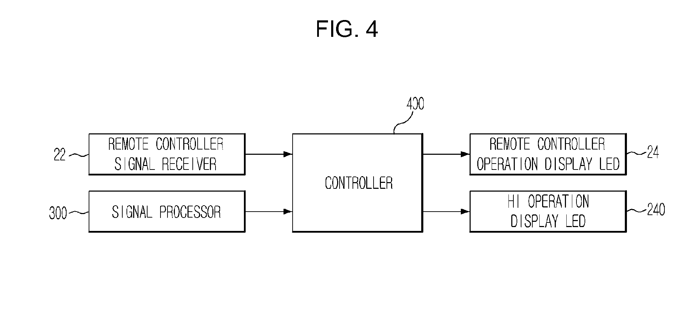

A remote controller signal module 20 is provided at a lower portion of the right side of the body 11. The remote controller signal module 20 includes a remote controller signal receiver 22 to receive a remote controller signal, and a remote controller operation display LED 24 indicates to a user that the display apparatus 10 is being operated by the remote controller signal. The remote controller receiver 22 is mounted on the inside the body 11, and the remote controller operation display LED 24 is mounted on the lower end of the right side of the bezel 13. The remote controller signal module 20 is connected to a controller (400 in FIG. 4) which controls the overall operation of the display apparatus 10 through an internal cable (not shown).

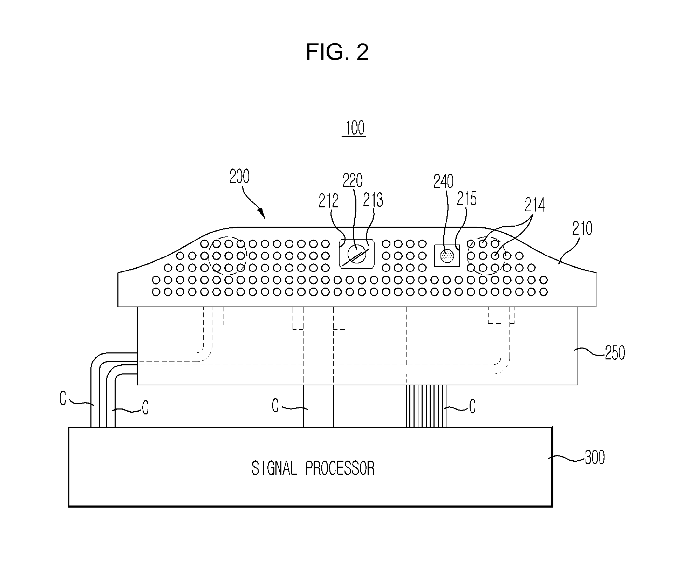

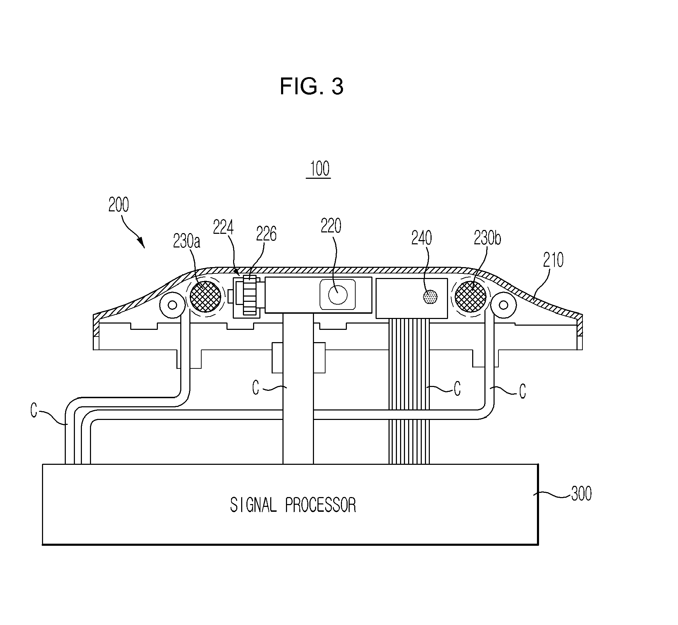

A signal input device 200 including a camera (220 in FIG. 3) and microphones (230a and 230b in FIG. 3) is mounted on the upper portion of the body 11. The detailed description of the signal input device 200 will be made with reference to FIGS. 2 and 3.

FIGS. 2 and 3 are views illustrating the configuration of a human interface (HI) module forming the display apparatus of FIG. 1.

The display apparatus 1 in accordance to the exemplary embodiment of the present disclosure includes a human interface (HI) module 100 which performs a human interface function, such as speech recognition, gesture (motion) recognition and a face recognition. The human interface module 100 includes the signal input device 200 which acquires an image signal and a speech signal from outside, and a signal processor 300 which receives and processes the image signal and speech signal being acquired through the signal input device 200.

Referring to FIGS. 2 and 3, the signal input device 200 includes a case 210 forming the external appearance of the signal input device 200.

The interior of the case 210 is provided with hollowness in which the camera 220 and the microphones 230a and 230b are installed, and a microphone hole 214 is formed through the outer surface of the case 210 so as to receive the speech signal of the microphones 230a and 230b which are installed at the inside the case 210.

Plural microphone holes 214 may be provided at each of a front surface and a rear surface of the case 210.

In addition, a camera installation hole 212 may be formed at a front side of the case 210 at a position corresponding to an installation position of the camera 220.

A front side panel 213, which protects the camera 220, is installed at the camera installation hole 212. The front side panel 213 may be formed of transparent material such as plastic or glass, but is not limited thereto.

In addition, an LED installation hole 215 may be formed at the right side of the case 210 at a position corresponding to an installation position of a human interface operation display LED 240. The human interface operation display LED 240 indicates to a user that the display apparatus 10 is being operated according to the human interface function, such as speech recognition, gesture (motion) recognition, and face recognition.

A coupling protrusion 250 may be provided at a lower portion of the case 210. The coupling protrusion 250 is inserted into a coupling groove (not shown) provided at the upper portion of the body 11 of the display apparatus so as to couple the signal input device 200 to the body 11.

The camera 220 and the microphones 230a and 230b installed at the inside the case 210 are connected to the signal processor 300 through at least one cable cable (C). The signal processor 300 refers to a configuration part which processes the image signal input through the camera 220 and the speech signal input through the microphones 230a and 230b. The signal processor 300 is implemented on a printed circuit board (PCB). The signal processor 300 performs an analysis on the image signal and the speech signal by applying a speech recognition algorithm, a gesture (motion) recognition algorithm and a face recognition algorithm to the image signal about an object obtained by the camera 220 and the speech signal about the object being input through the microphones 230a and 230b. The signal processor 300 converts the analyzed information (signal) into a signal format that is recognizable to the controller (400 in FIG. 4), and outputs the converted information to the controller 400.

The speech recognition refers to a technology in which human voice, which is input as a test speech signal, is compared with a reference speech signal, which is obtained by storing human voices of many people through sampling in a system such that the context of the speech signal being input is recognized. Examples of the speech recognition scheme include dynamic time warping (DTW), and hidden markov mode (HMM). The dynamic time warping scheme is mainly used for an isolated word recognition. The hidden markov mode scheme is mainly used for a connected word recognition. The speech recognition technology is generally known in the art, and a detailed description thereof will be omitted.

The gesture (motion) recognition refers to a technology of recognizing the gesture of a user based on dynamic image information acquired from the camera 220.

In addition, the face recognition refers to a technology of adopting a face of a human in identifying a person. The face recognition is mainly used to verify the private characteristics of a person or check the identity of a person. The face recognition scheme may be achieved by detecting a face area from an image being input through the camera 220, extracting feature information from the detected face area, and comparing the extracted feature information with feature information stored in a database such that the face is recognized.

When described with the internal configuration of the signal input device 200 in detail with reference to FIG. 3, the camera 220, an angle adjustment device 224 to adjust the viewing angle of the camera 220, and a pair of microphones 230a and 230b and the human interface operation display LED 240 are installed at an inside the case 210 of the signal input device 200.

The camera 220 is installed in the center of inside the case 210 to photograph an object, for example, a user, and transmits an image signal about the photographed object to the signal processor 300 through at least one of the cables (C).

The angle adjustment device 224 includes a wheel 226 which is rotatable, and a gear device (not shown) configured to deliver a rotation of the wheel 226 to the camera 220 such that the camera 220 rotates up and down.

The wheel 226 is provided in a cylinder shape, and is installed at a wheel installation hole (not shown) formed at the rear side of the case 210 such that a portion of the cylinder shape of the wheel 226 is exposed to the outside.

Accordingly, the user may adjust the viewing angle of the camera 220 by rotating the wheel 226 exposed through the rear side of the case 210.

The microphones 230a and 230b may be installed at the left side and the right side of the case 210, respectively, to receive the speech signal of an object, for example, a user, and transmit the received speech signal to the signal processor 300 through the cable (C). However, the position of the microphones is not limited thereto

The human interface operation display LED 240 indicates to the user that an operation control of the display apparatus 10 is performed according to the human interface function, such as the speech recognition, the gesture (motion) recognition, and the face recognition.

FIG. 4 is a control block diagram illustrating the display apparatus of FIG. 1.

The remote controller signal receiver 22 receives a remote controller signal corresponding to an input of a user. The user may change a channel, adjust a volume or set an operation environment of the display apparatus 10 by using a remote controller (not shown). In general, the remote controller signal may be implemented using an infrared signal, but other wireless communication signals may be used as the remote control signal. If a user inputs various commands by use of a remote controller, the remote controller transmits a remote controller signal corresponding to the input of the user, and the remote controller signal receiver 22 receives and decodes the remote controller signal so as to transmit the decoded control signal to the controller 400 that controls the overall operation of the display apparatus 10.

The signal processor 300 performs an analysis on the image signal and the speech signal by applying speech recognition algorithm, gesture (motion) recognition algorithm and face recognition algorithm to the image signal and the speech signal being input through the signal input device 200, and transmits the analyzed information (signal) to the controller 400.

The controller 400 controls the overall operation of the display apparatus 10. The controller 400 interprets the analyzed information being transmitted from the signal processor 300 through the internal cable, and determines a control operation desired by a user so as to perform a function control of a corresponding block (not shown).

In addition, the controller 400 receives commands, which are related to the operations and functions of the display apparatus 10, being transmitted from the remote controller signal receiver 22 through the internal cable, and performs a function control of a corresponding block (not shown).

If a user inputs an operation command, for example, a channel switch, a volume adjustment, by use of a remote controller to control the operation of the display apparatus 10, an operation control signal of the remote controller is transmitted to the remote controller signal receiver 22 provided at a lower portion of the right side of the body 11. Thereafter, the controller 400 interprets the control signal being transmitted from the remote controller signal receiver 22, and controls the operation of a corresponding function unit according to the command (request) of the user. In this case, the controller 400 transmits a control signal to the remote controller operation display LED 24 to control such that the remote controller operation display LED 24 indicates to a user that the display apparatus 10 is being operated by the remote controller signal.

Meanwhile, in a case that a user desires to control the operation of the display apparatus 10 by use of the human interface function, for example, in a case that a user generates a speech signal stating "volume up" or "volume down" to adjust the volume by use of the speech recognition function, the speech signal is transmitted to the signal processor 300 through the microphones 230a and 230b. The signal processor 300 performs an analysis on the speech signal by applying a speech recognition algorithm to the speech signal being input through the microphones 230a and 230b, and transmits the analyzed information (signal) to the controller 400. Thereafter, the controller 400 interprets the analyzed information being transmitted from the signal processor 300 to control (volume adjustment) an operation of a corresponding function unit according to the command (request) of a user. At this time, the controller 400 transmits a control signal to the HI operation display LED 240 to control such that the HI operation display LED 240 indicates to a user that the display apparatus is being operated by the human interface function.

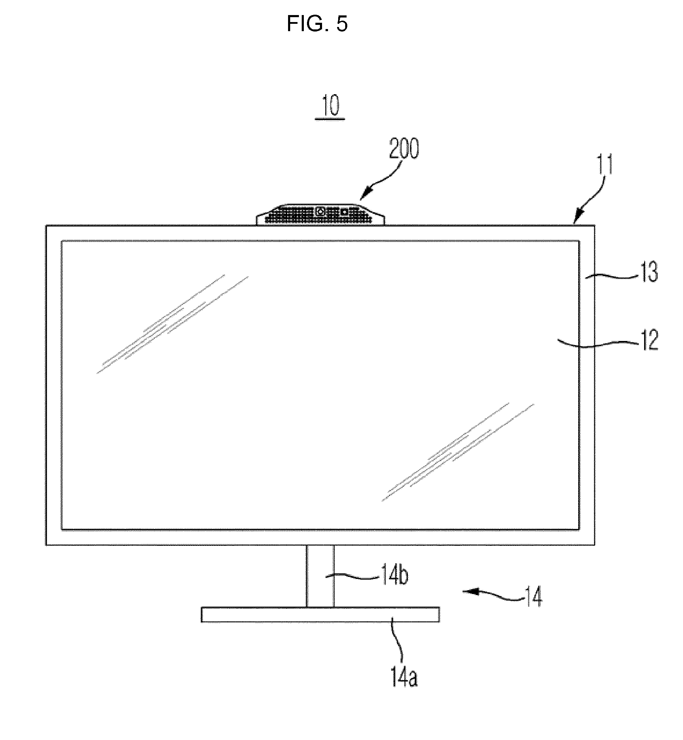

FIG. 5 is a view illustrating the external appearance of a display apparatus in accordance with another exemplary embodiment of the present disclosure.

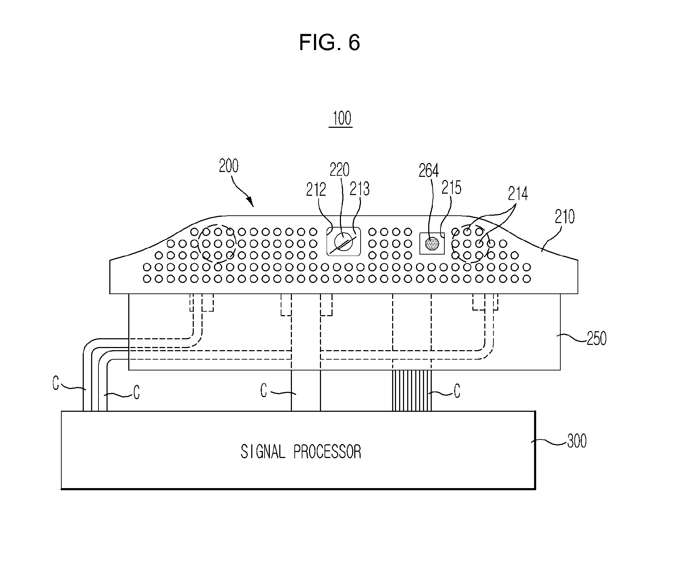

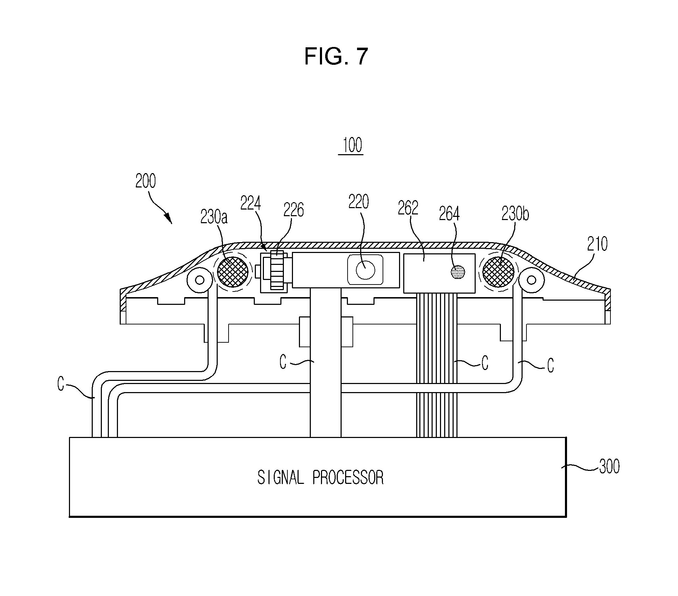

Referring to FIG. 5, the display apparatus 10 in accordance to another exemplary embodiment of the present disclosure has the remote controller signal module installed at a position inside of the signal input device 200, instead of at an outer portion of the body 11 of the display apparatus as illustrated in FIG. 1, thereby providing a difference from the display apparatus 10 shown in FIG. 1. The description of the signal input device 200 which is formed on the display apparatus 10 of FIG. 5 will be described with reference to FIGS. 6 and 7.

Referring to FIG. 6, the signal input device 200 has a multi-color LED 264 installed at the LED installation hole 215 without having the human interface operation display LED installed at the LED installation hole 215, thereby providing a difference from the signal input device 200 shown in the exemplary embodiment of FIG. 1.

As illustrated in FIGS. 2 and 3, the human interface operation display LED 240 is installed an inside portion of the signal input device 200 of the display apparatus 10. However, in FIGS. 6 and 7, a remote controller signal receiver 262 which receives a remote controller signal, and the multi-color LED 264 are installed at an inside portion of the signal input device 200 of the display apparatus. The multi-color LED 264 may be disposed at one side of the remote controller signal receiver 262.

The display apparatus 10 according to the previous exemplary embodiment shown in FIGS. 1 to 4 includes two operation display LEDS, that is, the remote controller operation display LED 24 and the HI operation display LED 240, and displays, to the user, the operation of the display apparatus 10 according to the remote controller signal and the operation of the display apparatus 10 according to the human interface function through the respective LEDs 24 and 240.

However, the display apparatus 10 shown in FIGS. 5 to 8 includes a single operation display LED, that is, the multi-color LED 264, and displays the operation of the display apparatus 10 according to the remote controller signal as a predetermined color, for example, red, and displays the operation of the display apparatus according to the human interface function as another color, for example, green, different from the color displayed upon the operation according to the remote controller signal.

That is, the display apparatus shown in FIGS. 5 to 8 indicates the operation control according to the remote controller and the operation control according to the human interface by use of the single multi-color LED 264 without using respective operation display LEDs, thereby providing a slimness of the module design.

Referring to FIGS. 6 and 7, the other components, except for the remote controller signal receiver 262 and the multi-color LED 264 of the signal input device 200 forming the display apparatus 10, are identical to those of the signal input device 200 of the display apparatus 10 according to the previous exemplary embodiment in the configuration. Accordingly, a description thereof will be omitted in order to avoid redundancy.

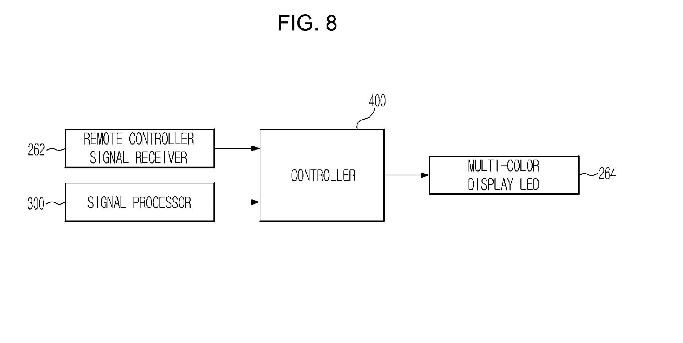

FIG. 8 is a control block diagram illustrating the display apparatus of FIG. 5.

The remote controller signal receiver 262 receives a remote controller signal corresponding to the input of a user. The user may change a channel, adjust the volume and set an operation environment of the device by using a remote controller (not shown). In general, the remote controller signal may be implemented using an infrared signal, but other wireless communication signals may be used as the remote control signal. If a user inputs various commands by use of a remote controller, the remote controller transmits a remote controller signal corresponding to the input of the user, and the remote controller signal receiver 262 receives and decodes the remote controller signal to transmit the decoded control signal to the controller 400 that controls the overall operation of the display apparatus 10.

The signal processor 300 performs an analysis on the image signal and the speech signal by applying a speech recognition algorithm, a gesture (motion) recognition algorithm and the face recognition algorithm to the image signal and the speech signal input through the signal input device 200, and transmits the analyzed information (signal) to the controller 400.

The controller 400 controls the overall operation of the display apparatus 10. The controller 300 interprets the analyzed information being transmitted from the signal processor 300 through the internal cable, and determines a control operation desired by a user and performs a function control of a corresponding block (not shown).

In addition, the controller 400 receives commands, which are related to the operations and functions of the display apparatus 10, being transmitted from the remote controller signal receiver 262 through the internal cable, and performs a function control of a corresponding block (not shown).

If a user inputs an operation command, for example, a channel change or a volume adjustment, by use of a remote controller to control the operation of the display apparatus 10, an operation control signal of the remote controller is transmitted to the remote controller signal receiver 262 provided at an inside portion of the signal input device 200. Thereafter, the controller 400 interprets the control signal being transmitted from the remote controller signal receiver 262, and controls the operation of a corresponding function unit according to the command (request) of the user. In this case, the controller 400 transmits a control signal to the multi-color LED 264 to control such that the multi-color LED 264 indicates to a user that the display apparatus 10 is being operated according to the remote controller signal, by displaying a predetermined color of light, for example, red.

Meanwhile, in a case that a user desires to control the operation of the display apparatus 10 by use of the human interface function, for example, in a case that a user generates a speech signal stating "volume up" or "volume down" to adjust the volume by using the speech recognition function, the speech signal is transmitted to the signal processor 300 through the microphones 230a and 230b. The signal processor 300 performs an analysis on the speech signal by applying a speech recognition algorithm to the speech signal input through the microphones 230a and 230b, and transmits the analyzed information (signal) to the controller 400. Thereafter, the controller 400 interprets the analyzed information being transmitted from the signal processor 300 so as to control the operation of a corresponding function unit according to the command (request) of a user (for example, volume adjustment). At this time, the controller 400 transmits a control signal to the multi-color LED 264 to control such that the multi-color LED 264 indicates to a user that the display apparatus is being operated by the human interface function, by displaying a color different from the color displayed during the operation according to the remote controller signal.

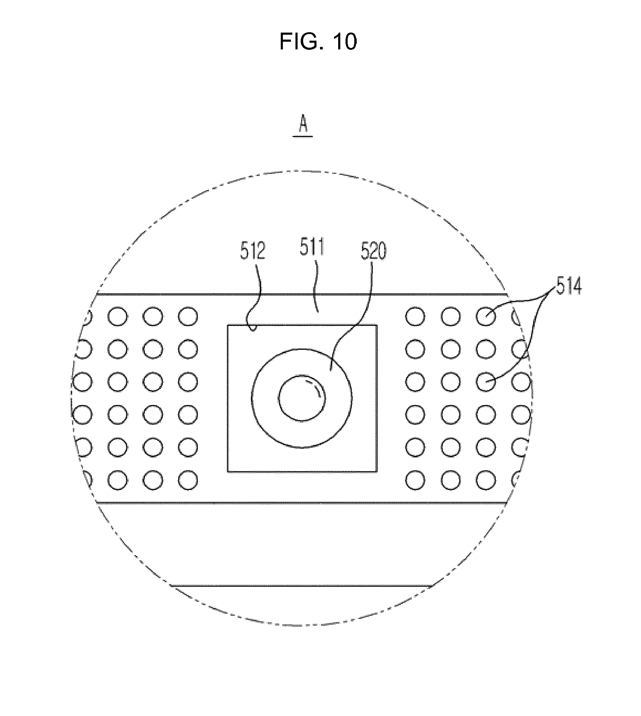

FIG. 9 is a front view schematically illustrating a display apparatus 30 in accordance with still another exemplary embodiment of the preset disclosure. FIG. 10 is an enlarged view showing the portion "A" of FIG. 9.

Referring to FIGS. 9 and 10, the display apparatus 30 includes a body 31 forming the external appearance of the display apparatus 30, a display panel 32 mounted on the front surface of the body 31 to display image information, a bezel 33 disposed at an outer side of a rim of the display panel 32, and a stand 34 which fixes the display panel 32 and the bezel 33.

The display panel 32 is implemented using a thin film transistor liquid crystal display (TFT-LCD) formed by injecting a liquid crystal layer between two glass substrates on which a color filter and a thin film transistor are formed.

The bezel 33 is provided at each of four sides of the display panel 32 to accommodate rims of the four sides of the display panel 32.

The stand 34 includes a support portion 34a provided to be in a flat shape to support the bottom, and a connection portion 34b fixed to the bezel 33 provided at a lower side of the display panel 32 while extending from the support portion 34a upward.

A signal input device 500 is mounted on the upper portion of the body 31.

The signal input device 500 includes a camera 520 and a case 510 to which the camera 520 is installed.

The case 510 is disposed at a center of an upper side of the bezel 33 and may be integrally formed with the bezel 33.

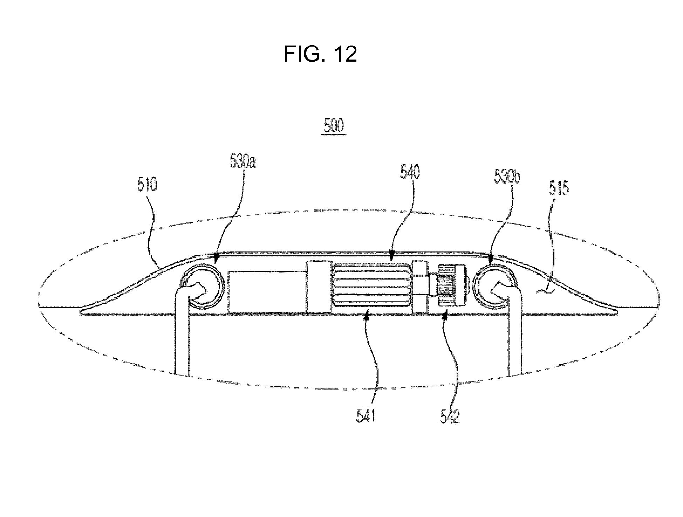

The interior of the case 510 is provided with a hollow portion in which the camera 520 is installed, and a microphone hole 514 is formed through the outer surface of the case 510 so as to receive the speech signal of microphones (530a and 530b in FIG. 12) installed inside the case 510.

Plural microphone holes 514 may be provided at each of a front surface and a rear surface of the case 510 to recognize sound inputted to the front side and the rear side of the display apparatus 30.

Additionally, a camera installation hole 512 may be formed at a front side 511 of the case 510 at a position corresponding to an installation position of the camera 520.

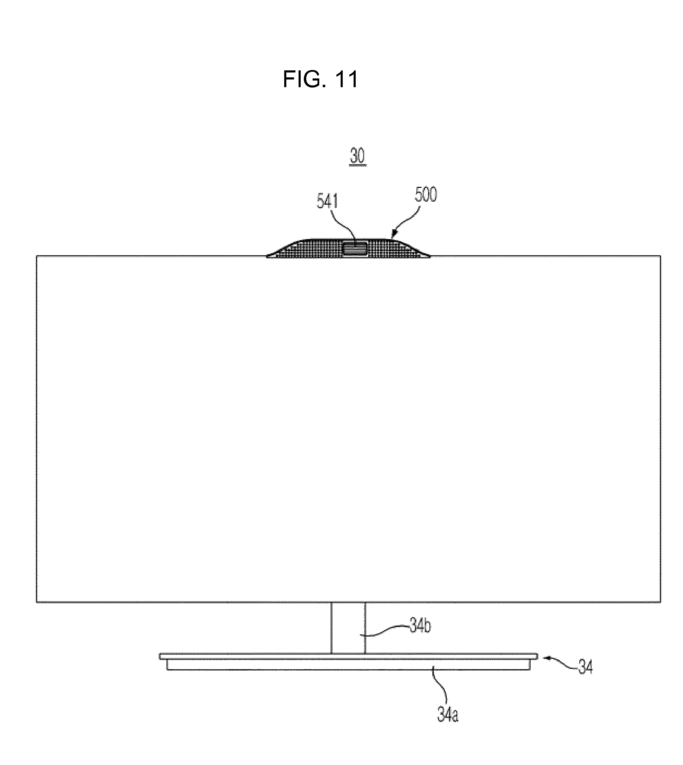

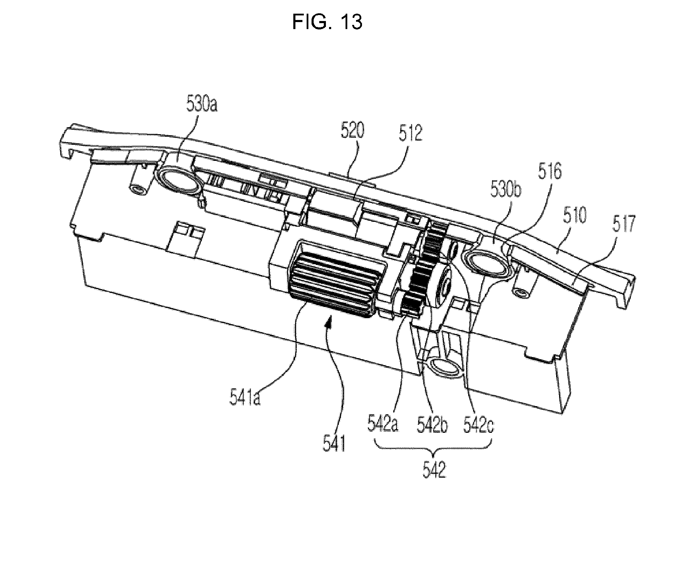

FIG. 11 is a view schematically illustrating the rear side of the display apparatus of FIG. 9. FIG. 12 is a view schematically illustrating the internal structure of a signal input device forming the display apparatus of FIG. 9. FIG. 13 is a perspective view schematically illustrating the internal structure of a signal input device forming the display apparatus of FIG. 9.

Referring to FIGS. 11 to 13, the signal input device 500 includes a case 510 provided therein with a hollow part 515 in which the camera 520 and the microphones 530a and 530b are installed, and an angle adjustment device 540 to adjust the viewing angle of the camera 520.

An installation bracket 517 is provided at a front portion inside the hollow part 515 such that the microphones 530a and 530b, the camera 520, and the angle adjustment device 540 for the camera 520 are installed on the installation bracket 517. A microphone installation hole 516 is provided in a circular shape at both end portions of the installation bracket 517.

The microphones 530a and 530b include a first microphone 530a provided at one side of the camera 520 and a second microphone 530b provided at the other side of the camera 530.

The angle adjustment device 540, which adjusts the viewing angle of the camera 520, includes a wheel 541 which is rotatable, and a gear device 542 which delivers a rotation of the wheel 541 to the camera 520 such that the camera 520 adjusts the viewing angle while rotating up and down.

The wheel 541 is provided in a cylinder shape, and has a plurality of protrusions 541 a that are formed in a lengthwise direction while arranged in a circumferential direction of the wheel 541. The wheel 541 is installed such that a portion of the wheel 541 is exposed to the outside through the rear side of the case 510. A user may adjust the viewing angle of the camera 520 by rotating the wheel 541 by use of the protrusion 541 a, which is formed on the outer surface of the wheel 541, being exposed to the outside.

The gear device 542 is connected to one side of the wheel 541.

The gear device 542 includes a first gear 542a having one side connected to the wheel 541 to rotate the wheel 541, a third gear 542c connected to one side of the camera 520 to rotate the camera 520, and a second gear 542b provided between the first gear 542a and the third gear 542c.

The first gear 542a, the second gear 542b and the third gear 542c may be provided in the form of a reduction gear to adjust the speed of rotation of the camera 520 through a reduction gear ratio.

Accordingly, if a user rotates the wheel 541 provided at the rear side of the display panel 32 to adjust the viewing angle of the camera 520, the first gear 542a connected to the wheel 541 is rotated, the second gear 542b connected to the first gear 542a is rotated, the third gear 542c connected to the second gear 542b is rotated, and at the same time, the camera 520 connected to the third gear 542c is rotated.

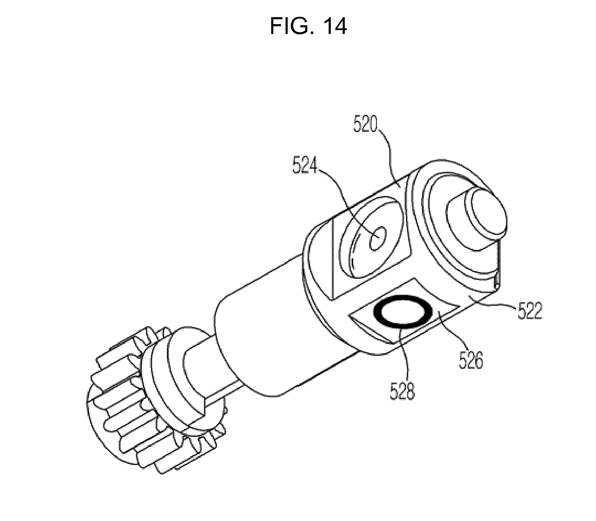

FIG. 14 is a view illustrating the shape of a camera being mounted on the display apparatus of FIG. 9.

The camera 520 has a configuration to photograph an object, for example, a user, and transmit an image signal about the photographed object to the signal processor (not shown) through a cable. The camera 520 includes a camera body 522 which may be provided in an approximate cylindrical shape, a lens 524 coupled to a hole that is formed by opening one side of the camera body 522, and a display 526 to indicate to a user that the camera 520 does not operate. An indicator 528 is formed on the display 526 to indicate that the camera 520 is outside a range of the viewing angle required for the camera 520 to obtain an image. The indicator 528 may be implemented using at least one of a figure or a pattern, including a circle, a triangle, and a quadrangle, letters from the Korean alphabet and the English alphabet, for example, "A", and a color including red, white and green. Although not shown in the drawing, the display 526 may be provided with a light emitting diode (LED) mounted thereon to indicate to a user the deviation of the angle of the camera.

The display 526 is provided on the circumference of the camera body 522, and if the camera 520 is disposed at a position outside a range of the viewing angle required to obtain an image while rotating upward and downward, the display 526 enables a user to recognize the deviation of the camera through the camera installation hole 512, so that the user may easily adjust the viewing angle of the camera 520.

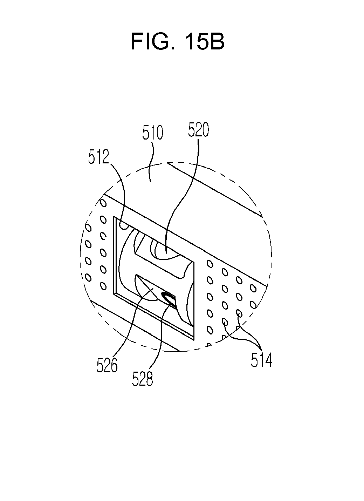

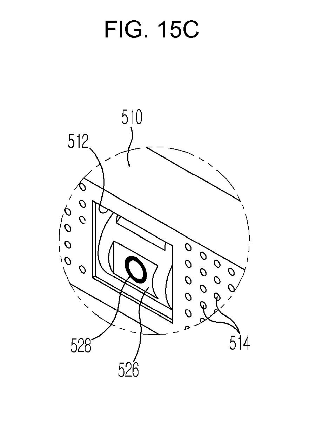

FIG. 15 is a view showing a process of adjusting the viewing angle of the camera of the display apparatus of FIG. 9.

FIG. 15A illustrates a case where the lens 524 of the camera 520 views the front, and in this case, the camera 520 has the largest viewing angle and may pick up the widest range of image.

FIG. 15B illustrates a case where the lens 524 of the camera 520 is tilted by an angle of about 45 degrees with respect to the front 511 of the case 510 as the camera 520 rotates upward. In this case, the viewing angle of the camera 520 is reduced, and the camera 520 has a decreased viewing angle and may pick up a narrower range of image when compared to the case of the camera 520 viewing the front.

FIG. 15C illustrates a case where the lens 524 of the camera 520 is tilted by an angle of about 90 degrees with respect to the front 511 of the case 510 as the camera 520 rotates upward at the upper most rotating position. In this case, the camera 520 is disposed outside a range of the viewing angle required to obtain an image, and the camera 520 fails to pick up an image.

If the camera 520 is disposed outside a range of the viewing angle required to photograph an image by rotating upward or downward as such, the indicator, such as a pattern or a letter, formed on the display 526 is revealed through the camera installation hole 512, so that the user may easily adjust the viewing angle of the camera 520 through such.

FIG. 16 is a front view schematically illustrating a display apparatus 40 in accordance with still another exemplary embodiment of the present disclosure. FIG. 17 is an enlarged view showing the portion "B" of FIG. 16.

Referring to FIGS. 16 and 17, the display apparatus 40 includes a body 41 forming the external appearance of the display apparatus 40, a display panel 42 mounted on the front surface of the body 41 to display image information, a bezel 43 disposed at an outer side of a rim of the display panel 42, and a stand 44 which fixes the display panel 42 and the bezel 43. The display panel 42 may be implemented using a thin film transistor liquid crystal display (TFT-LCD) formed by injecting a liquid crystal layer between two glass substrates on which a color filter and a thin film transistor are formed.

The bezel 43 is provided at each of four sides of the display panel 42 to accommodate rims of the four sides of the display panel 42.

The stand 44 includes a support portion 44a provided to be in a flat shape to support the bottom, and a connection portion 44b fixed to the bezel 43 provided at a lower side of the display panel 42 while extending from the support portion 44a upward.

A signal input device 600 is mounted on the upper portion of the body 41.

The signal input device 600 includes a camera 620 and a case 610 to which the camera 620 is installed, an angle adjustment device 640 to adjust the viewing angle of the camera 620, and a center indicating device 630 configured to enable a position of a center of the camera 620 to be indicated from an outside position.

The case 610 is disposed at a center of an upper side of the bezel 43, and may be integrally formed with the bezel 43.

The interior of the case 610 may be hollow, and a camera 620 is installed therein. A microphone hole 614 is formed through the outer surface of the case 610 so as to receive the speech signal of microphones (not shown) installed at the inside the case 610.

Plural microphone holes 614 are provided at each of a front surface and a rear surface of the case 610.

In addition, a camera installation hole 612 may be formed at a front side 610a of the case 610 at a position corresponding to an installation position of the camera 620.

A front side panel 613 which protects the camera 620 is installed at the camera installation hole 612.

The front side panel 613 may be formed of transparent material such as plastic or glass, but is not limited thereto.

The center indicating device 630 is formed such that the position of the center of the camera 620 installed at an inside location of the case 610 is seen by a user from the outside.

The center indicator 630 includes a first center indicator 631 located at the front side 610a of the case 610 so as to be easily recognized by the user, and a second center indicator 632 located at the front side panel 613 disposed on the front of the camera 620.

Referring to FIGS. 18 and 19, the center indicator 630 may further include a third center indicator 633 located at a rear side of the case 610, and a fourth center indicator 634 located at the angle adjustment device 640 which adjusts the viewing angle of the camera 620.

The angle adjustment device 640 includes a wheel 641 which is rotatable, and a gear device 642 which delivers a rotation of the wheel 641 to the camera 620 such that the camera 620 rotates up and down.

The wheel 641 is provided in a cylinder shape, and has a plurality of groove portions 641 a radially recessed inward and protrusion portions 641 b, which are connected from the groove portions 641 a and protruding outward while being formed in a lengthwise direction.

The wheel 641 is installed in a wheel installation hole 610c formed at a rear side 610b of the case 610 such that a portion of the wheel 641 is exposed to the outside.

Accordingly, a user may adjust the viewing angle of the camera 620 by rotating the wheel 641 exposed to the outside through the rear side 610b.

In this case, the fourth center indicator 634 may be formed on at least one of the groove portion 641 a and the protrusion portion 641 b of the wheel 641.

FIGS. 20 and 21 are cross sectional views schematically illustrating the angle adjustment unit of the display apparatus of FIG. 16.

Hereinafter, the operation of the angle adjustment device 640 to adjust the viewing angle of the camera 620 will be described with reference to FIGS. 20 and 21.

The angle adjustment device 640 includes the wheel 641 and the gear device 642 having a plurality of gears.

The camera 620 is provided in the camera installation hole 612 that is formed at the front portion at an inside position of the case 610, and the wheel 641 is rotatably provided in the wheel installation hole 610c of the rear side 610b of the case 610.

A first gear 642a of the gear device 642 is fixedly provided at one side of the wheel 641, and a fifth gear 642e of the gear device 642 is fixedly provided at the camera 620.

A third gear 642c and a fourth gear 642d are provided between the first gear 642a and the fifth gear 642e.

The first gear 642a and a second gear 642b are provided in the form of a reduction gear to decelerate according to a gear reduction ratio.

In addition, the third gear 642c, the fourth gear 642d and the fifth gear 642e that are connected to the second gear 642b are provided in the form of a reduction gear to decelerate the camera 620.

The third to fifth gears 642c, 642d and 642e connected to the second gear 642b may have a gear reduction ratio equal to or larger than that of the second gear 642b.

If a user rotates the wheel 641, the first gear 642a connected to the wheel 641 is rotated, the second gear 642b connected to the first gear 642a is rotated, the third gear 642c connected to the second gear 642b, the fourth gear 642d connected to the third gear 642c, and the fifth gear 642e connected to the fourth gear 642d are rotated, and at the same time, the camera 620 connected to the fifth gear 642e is rotated.

In this case, the user may adjust the center of the camera 620 through the center indicator 630, which is exposed to the outside of the front side of the camera 620, the front side 610a or the rear side 610b of the case 610a of the case 610, or the wheel 641.

The angle adjustment device 640 shown in FIG. 21 has the first gear 642a of the gear device 642 connected to the wheel 641 while having the third gear 642c connected to the camera 620, and the second gear 642b is provided between the first gear 642a and the third gear 642c for deceleration.

The operation of the angle adjustment device 640 to adjust the viewing angle of the camera 620 is same as that described above in accordance with the previous exemplary embodiment of the present disclosure, and detailed description thereof will be omitted.

Although a few exemplary embodiments of the present disclosure have been shown and described, it would be appreciated by those skilled in the art that changes may be made in these exemplary embodiments without departing from the principles and spirit of the disclosure, the scope of which is defined in the claims and their equivalents.

## Claims

1. A display apparatus comprising:
a remote controller signal reception unit configured to receive a remote controller signal;
a remote controller operation display light emitting diode (LED) configured to indicate an operation control according to the remote controller signal;
a human interface module configured to perform a human interface function;
a human interface operation display light emitting diode (LED) configured to indicate an operation control according to the human interface function; and
a control unit configured to control the remote controller operation display LED and the human interface operation display LED by use of signals transmitted from the remote controller signal reception unit and the human interface module.

2. The display apparatus of claim 1, wherein the human interface module comprises:
a signal input unit configured to acquire an image signal and a speech signal from an outside source; and
a signal processing unit configured to receive and process the image signal and the speech signal being acquired through the signal input unit.

3. The display apparatus of claim 2, wherein the signal input unit comprises:
a camera configured to photograph an object and acquire the image signal about the object; and
a microphone configured to receive the speech signal of the object.

4. The display apparatus of claim 2, wherein the signal processing unit is configured to perform an analysis on the image signal and the speech signal by applying at least one of a speech recognition algorithm, a gesture recognition algorithm and a face recognition algorithm to the image signal and the speech signal being input through the signal input unit, and to transmit the analyzed signal to the control unit.

5. The display apparatus of claim 2, further comprising:
a body forming an external appearance of the display apparatus,
wherein the signal input unit is mounted outside of the body.

6. The display apparatus of claim 5, wherein the signal processing unit is mounted inside of the body.

7. A display apparatus comprising:
a remote controller signal reception unit configured to receive a remote controller signal;
a human interface module configured to perform a human interface function;
a multi-color light emitting diode (LED); and
a control unit configured to control the multi-color LED by use of signals being transmitted from the remote controller signal reception and the human interface module.

8. The display apparatus of claim 7, wherein the control unit is configured to control the multi-color LED to display a color during an operation control according to the remote controller signal, and during an operation control according to the human interface function, the control unit is configured to control the multi-color LED to display a color different from the color displayed during the operation control according to the remote controller signal.

9. The display apparatus of claim 7, wherein the human interface module comprises:
a signal input unit configured to acquire an image signal and a speech signal from an outside source; and
a signal processing unit configured to receive and process the image signal and the speech signal being acquired through the signal input unit.

10. The display apparatus of claim 9, wherein the signal input unit comprises:
a camera configured to photograph an object and acquire the image signal about the object; and
a microphone configured to receive the speech signal of the object.

11. The display apparatus of claim 9, wherein the signal processing unit is configured to perform an analysis on the image signal and the speech signal by applying at least one of a speech recognition algorithm, a gesture recognition algorithm and a face recognition algorithm to the image signal and the speech signal being input through the signal input unit, and transmit the analyzed signal to the control unit.

12. The display apparatus of claim 9, further comprising:
a body forming an external appearance of the display apparatus,
wherein the signal input unit is mounted outside of the body.

13. The display apparatus of claim 12, wherein the signal processing unit is mounted inside of the body.
